# EUROPEAN PATENT SPECIFICATION

(11) **EP 4 151 868 B1**
(45) Date of publication and mention of the grant of the patent: **24.12.2025**
(21) Application number: 20935101.4
(22) Date of filing: 30.06.2020
(51) Int. Cl.: F16B 35/06, F16B 23/00, F16B 39/282

(54) **BOLT HAVING OPENING**
BOLZEN MIT ÖFFNUNG
BOULON AYANT UNE OUVERTURE

(30) Priority: 11.05.2020 KR 20200055616
(43) Date of publication of application: 22.03.2023
(73) Proprietor: Bolts One Co., Ltd., Incheon 21990 (KR)
(72) Inventor: IM, Chang Gi, Incheon 21986 (KR)
(74) Representative: Gulde & Partner
(86) International application number: PCT/KR2020/008506
(87) International publication number: WO 2021/230420

(56) References cited:
- WO-A1-2010/024026
- CN-A- 108 488 180
- CN-Y- 2 740 830
- JP-A- 2006 046 624
- KR-A- 20040 010 166
- KR-A- 870 005 425
- US-A- 4 445 264

## Description

### Technical Field

The embodiments disclosed herein relate to a bolt including a head part and a threaded part, and more particularly to a bolt provided with openings that is provided with openings, thereby allowing the height of a head part to be reduced.

### Background Art

In general, a bolt includes a threaded part configured such that threads are formed on the outer circumferential surface of a shank, and a head part formed on one side of the threaded part and configured to allow the bolt to be coupled with various types of tools, as disclosed in Korean Utility Model Application No. 1999-0009107.

Such a conventional bolt performs fixing or fastening in such a manner that a tool such as a driver or a wrench is coupled to a tool coupling recess formed in the head part, the head part and the threaded part are rotated by the tool, and the threaded part is fastened to a structure such as a nut or is fastened directly to the base material of a structure made of wood.

In this case, in the conventional bolt, the depth of the tool coupling recess must be secured to a predetermined length for the stable coupling of a tool, and accordingly, the head part must also be secured to a predetermined height.

It is obvious that when the tool coupling recess is extended to the threaded part, the height of the head part can be made low. However, in this case, a problem arises in that the thickness of the threaded part greater than the thickness of a tool must be secured.

Furthermore, the conventional bolt has a problem in that the fastening state of the head part cannot be detected through a tool because the tool is completely accommodated in the tool coupling recess.

Moreover, the conventional bolt has a problem in that the threaded part is unintentionally rotated reversely and loosened in the event of repeated vibration or shock because the head part cannot be fixed to a structure after the threaded part has been fastened to the structure.

Another bolt is known from CN 2 740 830 Y, introducing a screw with a reversed T-shaped slot on its head and a specially designed screwdriver. The screw head features a straight slot combined with a transverse hole, forming a reversed T-shaped slot.

Therefore, there is a demand for a new technology capable of overcoming the above-described limitations of the related art.

Meanwhile, the above-described background technology corresponds to technical information that has been possessed by the present inventor in order to contrive the present invention or that has been acquired in the process of contriving the present invention, and can not necessarily be regarded as well-known technology that had been known to the public prior to the filing of the present invention.

### Disclosure

### Technical Problem

An object of the embodiments disclosed herein is to propose a bolt provided with openings, in which openings through which portions of a tool may be exposed are formed in portions of a coupling recess into which the tool is coupled, so that the height of a head part may be made relatively low without forming a thick threaded part.

Furthermore, an object of the embodiments disclosed herein is to propose a bolt provided with openings, which allows portions of a tool to protrude through openings formed in a coupling recess, so that the fastening state of a head part may be detected through the protruding portions.

Moreover, an object of the embodiments disclosed herein is to propose a bolt provided with openings, which allows a head part to be fixed in a state in which fastening is completed, so that the bolt may be prevented from being undesirably loosened.

### Technical Solution

As a technical solution for solving the above-described technical problem, there is provided a bolt according to claim 1, provided with openings, the bolt including a head part and a threaded part and being fastened to a structure through the threaded part while being rotated by a tool, the bolt further including: a coupling recess formed in the head part or the threaded part while forming a recess shape having a cross section corresponding to that of the tool, and configured to allow the tool to be coupled thereto; and one or more openings formed in portions of the coupling recess in hole shapes, and configured to expose at least portions of the tool, coupled to the coupling recess, out of the head part or the threaded part.

The coupling recess may include: an entrance portion formed in the head part, and configured to form an entrance for the accommodation of the tool; and an accommodation portion configured to extend from the entrance portion to the threaded part, to accommodate the tool, to extend to the threaded part through the head part, and to allow the openings to be formed in portions thereof.

The openings may be formed a boundary portion between the head part and the threaded part while being formed in the portions of the accommodation portion.

According to the invention the entrance portion are formed to have a width greater than that of the threaded part; and the accommodation portion may extend at a predetermined inclined angle so that the width thereof is narrowed gradually in a direction from the entrance portion to the threaded part.

The openings may be formed in a boundary portion between the head part and the threaded part while being formed through the inclination of the accommodation portion.

The accommodation portion may extend through the medium of the openings with the angle of the inclination set to an angle passing though the boundary portion between the head part and the threaded part; and the openings may expose the portions of the tool coupled to along the inclination of the accommodation portion while allowing the portions of the tool to protrude out of the head part and the threaded part.

The bolt may further include at least one anti-loosening protrusion configured to protrude from the bottom surface of the head part and to prevent the threaded part from being loosened by coming into close contact with and being caught on the structure in response to the fastening of the threaded part.

### Advantageous Effects

According to any one of the above-described technical solutions, there may be proposed the bolt provided with openings, in which the openings are formed in the boundary portion between the head part and the threaded part as the accommodation portion constituting part of the coupling recess to which the tool is coupled is extended at an angle passing through the boundary portion between the head part and the threaded part, so that the height of the head part may be formed to be lower than those of conventional head parts, with the result that the material of the bolt may be reduced and the volume and weight thereof may also be reduced.

According to any one of the above-described technical solutions, there may be expected the effects of discharging the foreign materials introduced into the coupling recess through the openings and dissipating the heat applied to the head part through the openings.

According to any one of the above-described technical solutions, there may be proposed the bolt provided with openings, which allows portions of a tool to protrude through the openings, so that when the head part is fastened to a structure, the protruding portions of the tool first come into contact with the structure, with the result that the fastening state of the head part may be detected through the tool.

According to any one of the above-described technical solutions, there may be expected the effect of fixing the head part to a structure by introducing an adhesive through the openings after the head part has been fastened to the structure.

According to any one of the above-described technical solutions, there may be expected the effect of preventing the head part from loosening undesirably because the anti-loosening protrusions formed on the bottom of the head part come into close contact with and are caught on a structure.

The effects that can be obtained by the embodiments disclosed herein are not limited to the above-described effects, and other effects that have not been described above will be clearly understood by those having ordinary skill in the art, to which the present invention, as it is defined by the appended claims, pertains, from the foregoing description.

### Description of Drawings

FIG. 1 is a perspective view showing a bolt provided with openings according to an embodiment;
FIG. 2 is a longitudinal sectional view showing the bolt provided with openings according to the embodiment;
FIG. 3 is a front view showing a state in which a tool is coupled to the bolt provided with openings according to the embodiment;
FIG. 4 is a cut-away perspective view showing the main part of the bolt provided with openings according to the embodiment;
FIG. 5 is a bottom perspective view showing a bolt provided with openings according to another embodiment; and
FIG. 6 shows schematic diagrams illustrating the comparisons between bolts provided with openings according to embodiments and conventional bolts.

### Mode for Invention

Embodiments of the present invention will be described in detail below with reference to the accompanying drawings so that those of ordinary skill in the art to which the present invention pertains can easily practice them. However, the present invention may be embodied in various different forms and is not limited to the embodiments described herein. Furthermore, parts irrelevant to the description are omitted to clearly illustrate the present invention in the drawings, and similar reference numerals are assigned to similar portions throughout the specification.

Throughout the specification, when one portion is described as being "connected or coupled" to another portion, this includes not only a case where the one portion is "directly connected or coupled" to the other portion but also a case where the one portion is "indirectly connected or coupled to the other portion with a third element disposed therebetween." Furthermore, when one portion is described as "including or comprising" one component, this does not mean that the portion does not exclude another component but means that the portion may further include another component, unless explicitly described to the contrary.

Embodiments will be described in detail below with reference to the accompanying drawings.

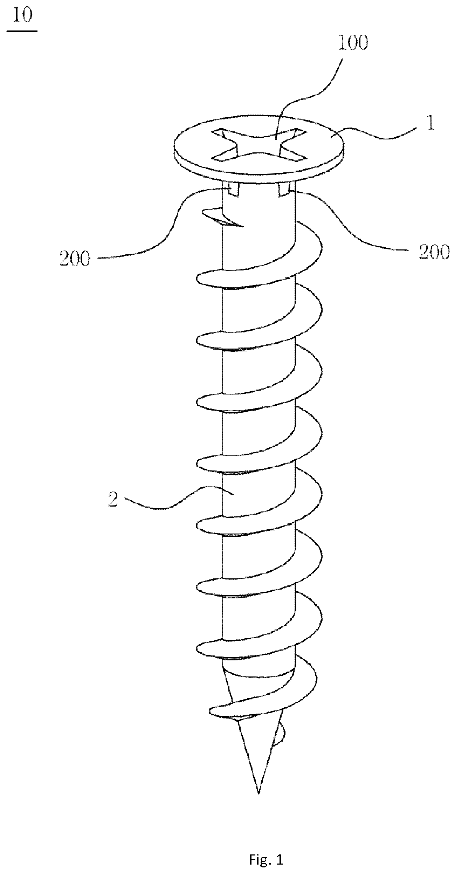

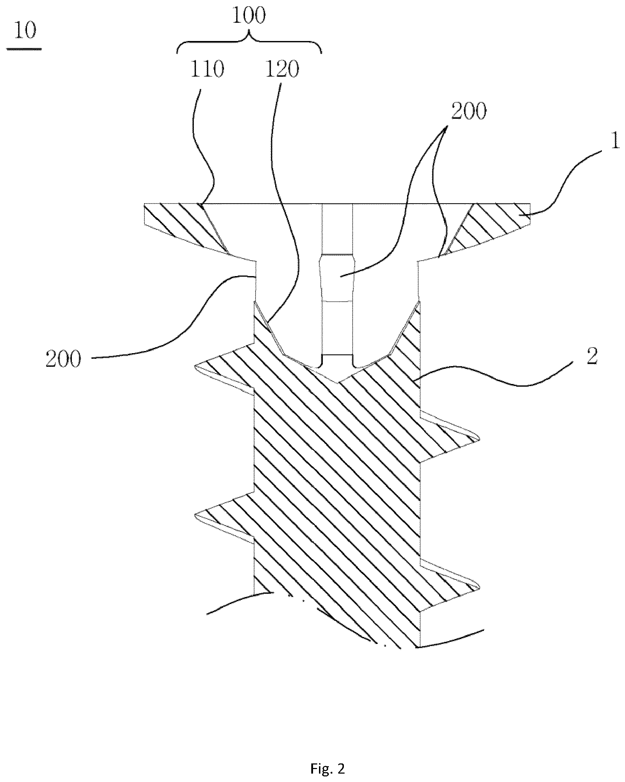

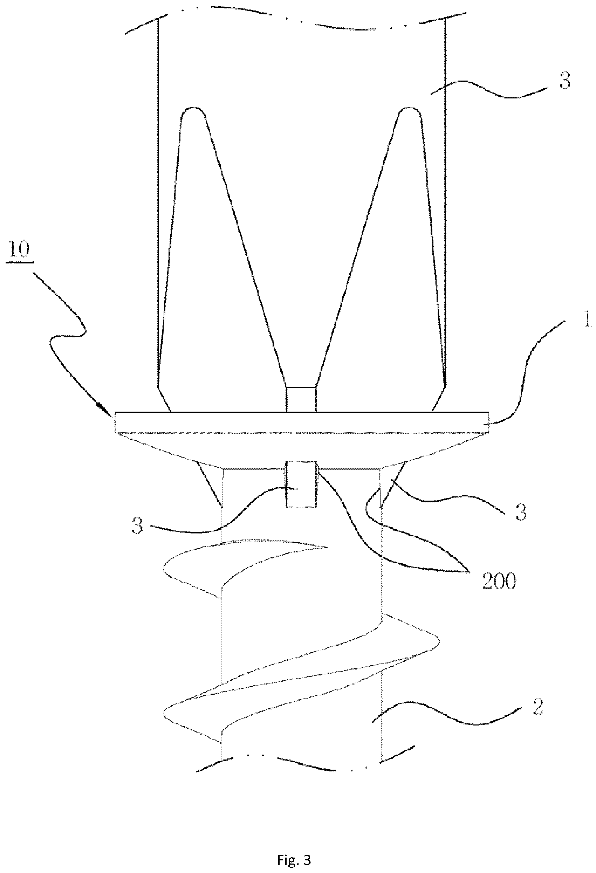

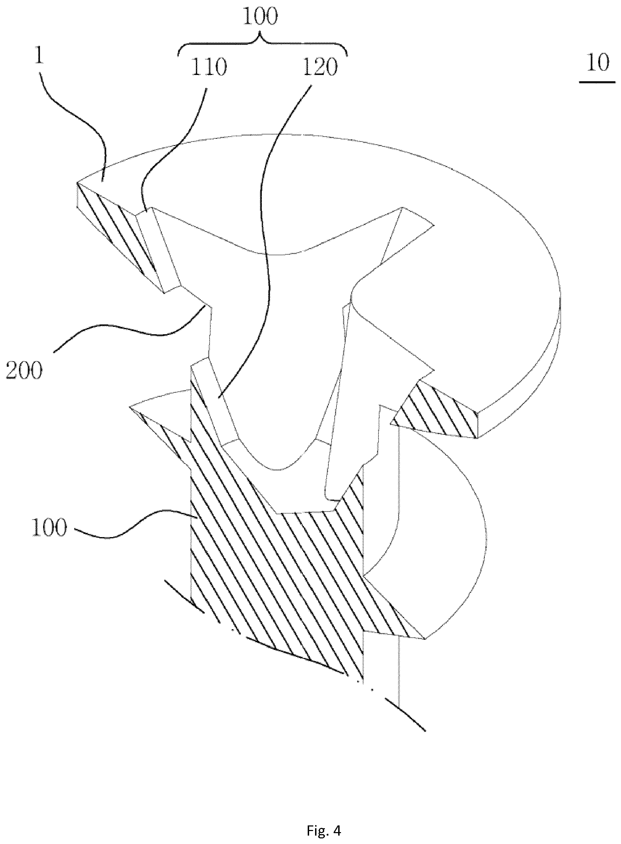

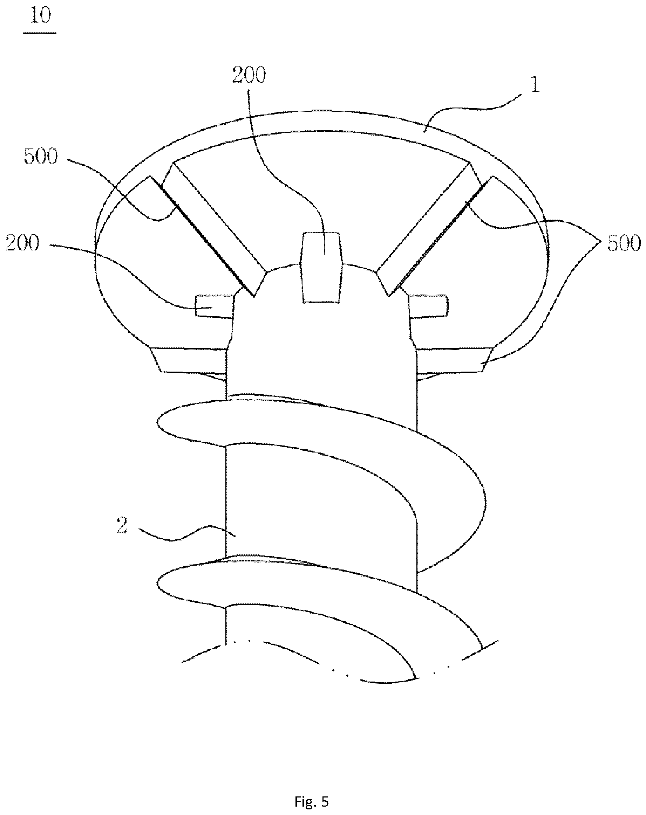

FIG. 1 is a perspective view showing a bolt provided with openings according to an embodiment, FIG. 2 is a longitudinal sectional view showing the bolt provided with openings according to the embodiment, FIG. 3 is a front view showing a state in which a tool is coupled to the bolt provided with openings according to the embodiment, FIG. 4 is a cut-away perspective view showing the main part of the bolt provided with openings according to the embodiment, and FIG. 5 is a bottom perspective view showing a bolt provided with openings according to another embodiment.

A bolt 10 provided with openings according to the present embodiment includes a head part 1 and a threaded part 2, as shown in FIGS. 1 and 2. The bolt 10 provided with openings is a fastener that is fastened to a structure through the threaded part 2 while being rotated by a tool 3 such as a driver.

The bolt 10 provided with openings may include a coupling recess 100 and openings 200.

The coupling recess 100 is a portion that provides a coupling portion for the tool 3, and is formed in a recess shape corresponding to that of the tool 3 so that the tool 3 can be inserted and coupled thereinto.

According to the invention, the coupling recess 100 may be formed in a "+" cross-sectional shape as shown in FIG. 1 and allow the coupling of a "+"-shaped driver. The coupling recess 100 may be formed in a "-" cross-sectional shape unlike the shape shown in the drawing and allow the coupling of a "-"-shaped driver. Alternatively, the coupling recess 100 may be formed in a cross-sectional shape corresponding to the cross-sectional shape of a polygonal wrench.

In other words, the coupling recess 100 may be formed in a shape corresponding to the shape of the tool regardless of the type of tool.

The coupling recess 100 may be formed in the head part 1, as shown in FIGS. 1 and 2. Unlike in the method shown in the drawing, it may be formed in the threaded part 2 and allow the tool 3 to be coupled thereto.

The bolt 10 provided with openings according to the present invention is configured such that the coupling recess 100 extends to the head part 1 and the threaded part 2, as shown in FIG. 2.

More specifically, the coupling recess 100 includes an entrance portion 110 and an accommodation portion 120, as shown in FIG. 2.

The entrance portion 110 is a portion forming the entrance of the coupling recess 100 configured to accommodate the tool 3, and is formed in the head part 1.

The entrance portion 110 may be formed to have a width corresponding to the width of the tool 3. The entrance portion 110 is formed to have a width greater than that of the threaded part 2, as shown in FIG. 2.

The accommodation portion 120 is a portion extending from the inlet portion 110 to the threaded part 2, and accommodates the tool 3 coupled through the entrance portion 110.

The accommodation portion 120 extends to the threaded part 2 through the head part 1 while extending from the entrance portion 110 toward the threaded part 2. Openings 200 to be described later are formed, so that portions of the tool 3 may be exposed to the outside.

According to the invention, the accommodation portion 120 may extend while forming a width corresponding to the width of the tool 3.

For example, the accommodation portion 120 may be formed to extend to the threaded part 2 while forming the same width as the entrance portion 110. The accommodation portion 120 is formed to extend while forming an inclination of a predetermined angle so that the width thereof is narrowed gradually in a direction from the entrance portion 110 to the threaded part 2.

In particular, as the width of the entrance portion 110 is formed to be greater than the width of the threaded part 2, as shown in FIG. 2, the accommodation portion 120 extends while forming an inclination so that the width thereof is narrowed in the direction of the threaded part 2. The accommodation portion 120 may extend to reach a width less than the width of the threaded part 2 while extending to the threaded part 2.

The openings 200 are portions that are formed in portions of the coupling recess 100 in the shape of holes, as shown in FIG. 2, so that at least portions of the tool 3 coupled to the coupling recess 100 are exposed out of the head part 1 or the threaded part 2, as shown in FIG. 3.

In other words, the openings 200 may expose portions of the tool 3 by allowing portions of the coupling recess 100 to communicate with the outside, and the effect of discharging the foreign materials introduced into the coupling recess 100 or dissipating the heat applied to the head part 1 may be expected.

Furthermore, the openings 200 may enable the head part 1 or the threaded part 2 to be fixed to the base material of a structure by allowing the introduction of an adhesive after the fastening of the threaded part 2 has been completed.

The openings 200 are formed in the accommodation portion 120 forming part of the coupling recess 100, and may be formed through the head part 1 or the threaded part 2.

According to the invention, when the openings 200 are formed through the head part 1 or the threaded part 2, portions of the tool 3 accommodated in the accommodation portion 120 may be exposed to be seen through the openings 200, but the tool 3 may not be exposed while protruding out of the head part 1 or the threaded part 2.

Meanwhile, the openings 200 are formed in the accommodation portion 120, and are formed through the boundary portion between the head part 1 and the threaded part 2, as shown in FIGS. 2 and 4.

In this case, when the accommodation portion 120 extends at an angle passing through the boundary portion between the head part 1 and the threaded part 2 while extending along an inclination of an angle at which the width thereof is narrowed gradually in the direction of the threaded part 2, the openings 200 may connect the inclined surface of the accommodation portion 120 while being formed through the boundary portion between the head part 1 and the threaded part 2.

In other words, the accommodation portion 120 may extend through the medium of the openings 200 while extending along an inclination of an angle passing through the boundary portion between the head part 1 and the threaded part 2.

In this case, as the tool 3 is coupled along the inclined surface of the accommodation portion 120, portions of the tool 3 may be exposed while protruding out of the head part 1 and the threaded part 2, as shown in FIG. 3.

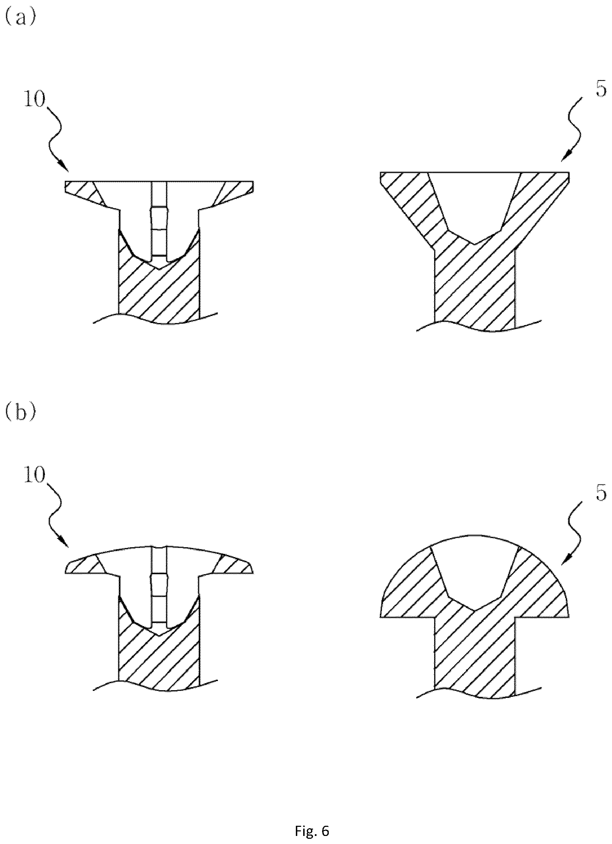

According to the invention, in the bolt 10 provided with openings according to the present embodiment, the height of the head part 1 may be formed to be lower than that of a conventional bolt 5 and also the depth of the coupling recess 100 may be formed to be relatively deep, as shown in FIG. 6.

According to the invention, the openings 200 may be applied regardless of the shape of the head 1, such as the shape of a flat head bolt shown in FIG. 6(a) or the shape of a round head bolt shown in FIG. 6(b), and thus the height of the head part 1 may be allowed to be relatively low.

Furthermore, the tool 3 is exposed to the outside through the openings 200, so that when the threaded part 2 is fastened to a structure, the completion of the fastening of the threaded part 2 may be detected as the tool 3 comes into direct contact with the surface of the structure.

It is obvious that even when the accommodation portion 120 extends while maintaining the same width as the entrance portion 110 and even when the accommodation portion 120 extends at an angle not passing through the boundary portion between the head part 1 and the threaded part 2, the openings 200 may be formed through the boundary portion between the head part 1 and the threaded part 2. In this case, although the openings 200 may expose portions of the tool 3 to be seed through the openings 200 while being formed through the boundary portion between the head part 1 and the threaded part2, they may not expose portions of the tool 3 while allowing the portions of the tool 3 to protrude out of the head part 1 or the threaded part 2.

Meanwhile, a bolt 10 provided with openings according to an embodiment may further include one or more anti-loosening protrusions 500, as shown in FIG. 5.

The anti-loosening protrusions 500 are portions that prevent the loosening of the fastened threaded part 2.

More specifically, the anti-loosening protrusions 500 may protrude from the bottom surface of the head part 1 while forming a plurality of anti-loosening protrusions, and may come into close contact with and be caught on the base material of a structure by the fastening of the threaded part 2, thereby preventing the head part 1 from being rotated arbitrarily.

In this case, the anti-loosening protrusions 500 may protrude from the bottom of the head part 1 while forming wedge-shaped cross sections, and may protrude in a direction opposite to the direction in which the threaded part 2 is tightened.

In this case, the anti-loosening protrusions 500 protrude in the direction opposite to the direction in which the threaded part 2 is tightened and are caught on the base material of the structure. Accordingly, even when repeated vibration or shock is applied to the head part 1, the anti-loosening protrusions 500 may prevent the threaded part 2 from being loosened by restraining the rotation of the head part 1.

Meanwhile, the anti-loosening protrusions 500 may protrude in a direction corresponding to the direction in which the threaded part 2 is tightened while forming wedge-shaped cross sections.

In this case, the anti-loosening protrusions 500 protrude in a forward direction corresponding to the direction in which the threaded part 2 is tightened, and face the surface of a structure when the threaded part 2 is fastened, thereby stopping the rotation of the threaded part 2.

A method of using the bolt 10 provided with openings according to the embodiment, which includes the above-described components, and the operational effects thereof will be described below.

The threaded part 2 may be fastened to a structure while being rotated by the tool 3 coupled to the coupling recess 100 of the head part 1.

In this case, as the tool 3 is coupled to the coupling recess 100, the tool 3 may rotate the head part 1 and the threaded part 2 while partially protruding through the openings 200. In a process in which the threaded part 2 is fastened to a structure, the completion of the fastening of the threaded part 2 may be detected based on a direct contact with the surface of the structure.

Furthermore, since the head part 1 is formed to have a relatively low height by the openings 200, the volume of an installation portion may be reduced.

In this case, the head part 1 may be prevented from being undesirably loosened by being fixed to the surface of a structure in the state of being caught on the surface of the structure through the anti-loosening protrusions 500 protruding from the bottom surface of the head part 1.

Meanwhile, the head part 1 may be fixed in the state of being fastened to a structure by introducing an adhesive through the openings 200 after the fastening to the structure has been completed.

As described above, according to the bolt 10 provided with openings according to the embodiment, the accommodation portion 120 constituting part of the coupling recess 100 extends at an angle passing through the boundary portion between the head part 1 and the threaded part 2, and the openings 200 are formed through the boundary portion between the head part 1 and the threaded part 2. Accordingly, the height of the head part 1 is formed to be relatively low, so that material may be reduced during the manufacture of the bolt and the volume and weight of the bolt may be also reduced.

The above-described embodiments are intended for illustrative purposes. It will be understood that those having ordinary knowledge in the art to which the present invention pertains can easily make modifications and variations without changing essential features of the present invention. Therefore, the above-described embodiments are illustrative and are not limitative in all aspects. For example, each component described as being in a single form may be practiced in a distributed form. In the same manner, components described as being in a distributed form may be practiced in an integrated form.

The scope of protection pursued through the present specification should be defined by the attached claims, rather than the detailed description. All modifications and variations which can be derived from the meanings and scopes of the claims should be construed as falling within the scope of the present invention.

## Claims

1. A bolt (10) provided with openings (200), the bolt comprising a head part (1) and a threaded part (2) formed with a threaded outer surface and being fastenable to a structure through the threaded part while being rotatable by a tool (3), the bolt further comprising:
a coupling recess (100) formed in a recess shape having a cross section to be matchable to that of the tool, and configured to allow the tool to be coupled thereto; and
two or more openings (200) formed in portions of the coupling recess in hole shapes,
wherein
the openings configured to be exposable to at least portions of the tool, coupled to the coupling recess, to be seen through a boundary portion between the head part and the threaded part,
the coupling recess configured to extend to the threaded part through the center of the head part and the threaded part, to provide one coupling space in the center of the head part to be coupleable to the tool that rotates,
wherein the coupling recess comprises:
an entrance portion (110) formed in the head part, and configured to form in a recess to be an entrance for being accommodatable to the tool, and formed to have a width greater than that of the threaded part; and
an accommodation portion (120) configured to extend as the recess shape from the entrance portion to the threaded part, to be accommodatable to the tool, to extend to the threaded part through the head part such that the openings are formed in portions of the accommodation portion, being allowable at least portions of the tool to be exposed to be seen through the openings,
wherein the accommodation portion extends at a predetermined inclined angle so that a width thereof is narrowed gradually in a direction from the entrance portion to the threaded part,
wherein the openings are formed in a boundary portion between the head part and the threaded part while being formed through an inclination of the accommodation portion,
wherein the coupling recess is formed in the recess shape having the cross section to be matchable to that of the tool including a screwdriver with one shaped head having one flat-head, one cross-head or one polygonal head.

2. The bolt of claim 1, wherein:
the accommodation portion extends through a medium of the openings with an angle of the inclination set to an angle passing through the boundary portion between the head part and the threaded part,
the openings configured to be exposable to the portions of the tool to be coupleable to along the inclination of the accommodation portion while being allowable the portions of the tool to protrude out of the head part and the threaded part.

3. The bolt of claim 1, further comprising at least one anti-loosening protrusion configured to protrude from a bottom surface of the head part and to prevent the threaded part from being loosened by coming into close contact with and being catchable on the structure in response to fastening of the threaded part.

## Patentansprüche

1. Bolzen (10) mit Öffnungen (200), wobei der Bolzen einen Kopfteil (1) und einen Gewindeteil (2), der mit einer Gewindeaußenfläche ausgebildet ist, umfasst und durch den Gewindeteil an einer Struktur befestigt werden kann, während er mit einem Werkzeug (3) gedreht werden kann, wobei der Bolzen ferner Folgendes umfasst:
eine Kupplungsaussparung (100), die in einer Aussparungsform mit einem Querschnitt ausgebildet ist, der mit dem des Werkzeugs übereinstimmen kann, und die so konfiguriert ist, dass das Werkzeug damit gekoppelt werden kann; und
zwei oder mehr Öffnungen (200), die in Abschnitten der Kupplungsaussparung in Lochform ausgebildet sind,
wobei
die Öffnungen so konfiguriert sind, dass sie mindestens Abschnitten des Werkzeugs, die mit der Kupplungsaussparung gekoppelt sind, ausgesetzt werden können, um durch einen Grenzabschnitt zwischen dem Kopfteil und dem Gewindeteil sichtbar zu sein,
die Kupplungsaussparung so konfiguriert ist, dass sie sich durch die Mitte des Kopfteils und des Gewindeteils zum Gewindeteil erstreckt, um einen Kupplungsraum in der Mitte des Kopfteils bereitzustellen, der mit dem sich drehenden Werkzeug gekoppelt werden kann,
wobei die Kupplungsaussparung Folgendes umfasst:
einen im Kopfteil ausgebildeten Eingangsabschnitt (110), der so konfiguriert ist, dass er in einer Aussparung einen Eingang zur Aufnahme des Werkzeugs bildet, und der so ausgebildet ist, dass er eine größere Breite als der Gewindeteil aufweist; und
einen Aufnahmeabschnitt (120), der so konfiguriert ist, dass er sich als Aussparungsform vom Eingangsabschnitt zum Gewindeteil erstreckt, um das Werkzeug aufzunehmen, und sich durch den Kopfteil zum Gewindeteil erstreckt, so dass die Öffnungen in Abschnitten des Aufnahmeabschnitts ausgebildet sind, wobei zumindest Abschnitte des Werkzeugs freigelegt werden können, um durch die Öffnungen sichtbar zu sein,
wobei sich der Aufnahmeabschnitt in einem vorbestimmten Neigungswinkel erstreckt, so dass seine Breite in Richtung vom Eingangsabschnitt zum Gewindeteil allmählich verringert wird,
wobei die Öffnungen in einem Grenzabschnitt zwischen dem Kopfteil und dem Gewindeteil ausgebildet sind, während sie durch eine Neigung des Aufnahmeabschnitts ausgebildet sind,
wobei die Kupplungsaussparung in der Aussparungsform ausgebildet ist, die einen Querschnitt aufweist, der mit dem des Werkzeugs übereinstimmen kann, das einen Schraubendreher mit einem geformten Kopf, der einen Flachkopf, einen Kreuzkopf oder einen polygonalen Kopf aufweist, umfasst.

2. Bolzen nach Anspruch 1, wobei:
sich der Aufnahmeabschnitt durch ein Medium der Öffnungen mit einem Neigungswinkel erstreckt, der auf einen Winkel eingestellt ist, der durch den Grenzabschnitt zwischen dem Kopfteil und dem Gewindeteil verläuft,
die Öffnungen so konfiguriert sind, dass sie den Abschnitten des Werkzeugs ausgesetzt werden können, die entlang der Neigung des Aufnahmeabschnitts gekoppelt werden können, während die Abschnitte des Werkzeugs aus dem Kopfteil und dem Gewindeteil herausragen können.

3. Bolzen nach Anspruch 1, umfassend ferner mindestens einen lockerungssicheren Vorsprung, der so konfiguriert ist, dass er von einer Bodenfläche des Kopfteils vorsteht und verhindert, dass sich der Gewindeteil löst, indem er in engen Kontakt mit der Struktur kommt und an dieser hängenbleiben kann, wenn der Gewindeteil festgezogen wird.

## Revendications

1. Boulon (10) pourvu d'ouvertures (200), le boulon comprenant une partie de tête (1) et une partie filetée (2) formée avec une surface externe filetée et permettant d'être fixée à une structure par l'intermédiaire de la partie filetée tout en étant mise en rotation par un outil (3), le boulon comprenant en outre :
une cavité de couplage (100) formée en forme de logement avec une section transversale permettant de correspondre à celle de l'outil, et configurée pour permettre à l'outil de s'y coupler ; et
deux ouvertures ou plus (200) formées dans des parties de la cavité de couplage en formes de trous,
dans lequel
les ouvertures sont configurées pour être exposées à au moins des parties de l'outil, couplées au logement de couplage, pour être visibles à travers une portion de limite entre la partie de tête et la partie filetée,
le logement de couplage est configuré pour s'étendre jusqu'à la partie filetée par le centre de la partie de tête et de la partie filetée, afin de fournir un espace de couplage au centre de la partie de tête pour être couplé à l'outil qui tourne,
dans lequel le logement de couplage comprend :
une portion d'entrée (110) formée dans la partie de tête, et configurée pour former un logement servant d'une entrée pour accueillir l'outil, et formée pour présenter une largeur supérieure à celle de la partie filetée ; et
une portion d'accueil (120) configurée pour s'étendre selon la forme de logement depuis la portion d'entrée jusqu'à la partie filetée, pour accueillir l'outil, s'étendre jusqu'à la partie filetée par la partie de tête de sorte que les ouvertures soient formées dans certaines parties de la portion d'accueil, permettant au moins à certaines parties de l'outil d'être visibles par les ouvertures,
dans lequel la portion d'accueil s'étend selon un angle d'inclinaison prédéfini de sorte que sa largeur se réduise progressivement dans une direction allant de la portion d'entrée à la partie filetée,
dans lequel les ouvertures sont formées dans une portion de limite entre la partie de tête et la partie filetée tout en étant formées selon une inclinaison de la portion d'accueil,
dans lequel le logement de couplage est formé en forme de logement avec la section transversale permettant de correspondre à celle de l'outil comportant un tournevis avec une tête formée ayant une tête plate, une tête cruciforme ou une tête polygonale.

2. Boulon selon la revendication 1, dans lequel :
la portion d'accueil s'étend par un milieu des ouvertures selon un angle d'inclinaison défini à un angle passant par la portion de limite entre la partie de tête et la partie filetée,
les ouvertures étant configurées pour être exposées aux parties de l'outil permettant de coupler selon l'inclinaison de la portion d'accueil tout en permettant aux parties de l'outil de faire saille de la partie de tête et de la partie filetée.

3. Boulon selon la revendication 1, comprenant en outre au moins une saille anti-desserrage configurée pour faire saille d'une surface inférieure de la partie de tête et pour empêcher la partie filetée de se desserrer en entrant en contact étroit avec la structure et de s'accrocher à la structure en réponse au serrage de la partie filetée.
